# EUROPÄISCHE PATENTANMELDUNG

(11) **EP 2 471 652 A1**
(43) Veröffentlichungstag der Anmeldung: **04.07.2012**
(21) Anmeldenummer: 10197203.2
(22) Anmeldetag: 28.12.2010
(51) Int. Cl.: B32B 25/08, B29C 55/02

(54) **Elastomerer Schichtstoff und Verfahren zu seiner Herstellung**

(71) Anmelder: Nordenia Technologies GmbH, 48599 Gronau (DE)
(72) Erfinder: Sollmann, Henner, 48599, Gronau (DE)
(74) Vertreter: Lorenz, Bernd Ingo Thaddeus

(57) **Zusammenfassung**

Die Erfindung betrifft einen elastomeren Schichtstoff (1) mit einer elastomeren Trägerschicht (2) aus einem thermoplastischen Elastomer und mindestens einer mikrotexturierten Deckschicht (3) aus einem Polymer, welches eine geringere Elastizität aufweist als das Material der Trägerschicht (2). Die Mikrotextur wird durch Verstrecken des Schichtstoffes (1) über die Elastizitätsgrenze der Deckschicht (3) hinaus und einer elastischen Rückbildung des verstreckten Schichtstoffes (1) gebildet. Erfindungsgemäß enthält die mikrotexturierte Deckschicht (3) eine Vielzahl von Poren (4). Gegenstand der Erfindung ist auch ein Verfahren zur Herstellung des Schichtstoffes. - Zu veröfifentlichen mit Fig. 1.

## Beschreibung

Die Erfindung betrifft einen elastomeren Schichtstoff mit einer elastischen Trägerfolie aus einem thermoplastischen Elastomer und mindestens einer mikrotexturierten Deckschicht aus einem Polymer, welches eine geringere Elastizität aufweist als das Material der Trägerschicht. Die Mikrotextur ist durch Verstrecken des Schichtstoffes über die Elastizitätsgrenze der Deckschicht hinaus und einer elastischen Rückbildung des verstreckten Schichtstoffes gebildet worden. Der elastomere Schichtstoff findet beispielsweise in Einmal-Hygieneprodukten Anwendung und wird beispielsweise als elastischer Bund oder als elastisches Verschlusselement an einer Windel eingesetzt.

Ein elastomerer Schichtstoff mit den eingangs beschriebenen Merkmalen ist aus EP 0 500 590 B1 bekannt. Die Deckschicht bildet eine relativ steife Schicht, die nur eine geringe Elastizität aufweist, und besteht beispielsweise aus einem Polyolefin, insbesondere Polyethylen oder Polypropylen, einem Polyethylenterephthalat oder Polyacrylat. Die Deckschicht des elastomeren Schichtstoffes weist eine Mikrotextur auf, die durch Verstrecken des Schichtstoffes über die Elastizitätsgrenze der Deckschicht hinaus erzeugt worden ist. Die Mikrotextur besteht aus kleinen Falten, die sich bei einer elastischen Rückstellung des elastomeren Schichtstoffes nach der Verstreckung ausbilden, wobei die Ausrichtung der Falten abhängig ist von der Verstreckungsrichtung. Der Schichtstoff kann uniaxial quer zur Maschinenrichtung oder biaxial verstreckt werden. Die Mikrotextur wird als aufgeraute, weiche Oberflächentextur wahrgenommen.

Aus EP 1 316 418 A1 ist ein Folien-Coextrudat bekannt, welches eine elastomere Trägerschicht und mindestens eine Deckschicht aus einem steiferen Polymer aufweist. Die Deckschicht besteht aus einem thermoplastischen Kunststoff mit einem spröde verfestigten Molekülverband, der sich unter Anwendung einer Dehnkraft nur wenig dehnt und bei Überschreiten einer vorgegebenen Reißkraft übergangslos reißt. Der spröde verfestigte Molekülverband wird durch eine als Aktivierung bezeichnete uniaxiale Verstreckung quer zur Extrusionsrichtung irreversibel aufgebrochen. Dadurch ist der Schichtstoff quer zur Extrusionsrichtung elastisch dehnbar. Die Deckschicht kann aus einem durch Nachbehandlung versprödeten Polyolefin, einer Mischung aus Polyolefin und Polystyrol oder einer Mischung aus Polyolefin, Polystyrol und Ethylen-Vinyl-Acetat bestehen. In Extrusionsrichtung, die auch als Maschinenrichtung bezeichnet wird, bleibt der spröde verfestigte Molekülverband erhalten und versteift das Material. Der Schichtenverbund weist keine Elastizität in Maschinenrichtung auf.

Der Erfindung liegt die Aufgabe zugrunde, die elastischen Eigenschaften des Schichtstoffes zu verbessern. Insbesondere soll der Schichtstoff auch in Extrusions- bzw. Maschinenrichtung elastisch und reversibel dehnbar sein.

Ausgehend von einem elastomeren Schichtstoff mit den eingangs beschriebenen Merkmalen wird die Aufgabe erfindungsgemäß dadurch gelöst, dass die mikrotexturierte Deckschicht eine Vielzahl von Poren enthält. Die Poren sind vorzugsweise gleichmäßig in der Deckschicht verteilt. Sie stellen bei einer Verstreckung des Schichtstoffes Sollbruchstellen dar, an denen die Deckschicht aufplatzt. Durch eine regelmäßige Verteilung der Poren wird eine gleichmäßige und fein verteilte Schwächung in vielen kleinen Zonen erreicht. Durch eine Verstreckung des Schichtstoffes, die auch als Aktivierung bezeichnet wird, erhält der Schichtstoff elastische Eigenschaften und zugleich eine mikrotexturierte Deckschicht. Die Poren in der Deckschicht verbessern die elastischen Eigenschaften des Schichtstoffes. Dieser ist nach seiner Aktivierung weitgehend reversibel dehnbar, wobei ein verbleibender irreversibler Anteil durch die Porenstruktur der mikrotexturierten Deckschicht reduziert werden kann. Die Poren bewirken darüber hinaus eine verbesserte Mikrotextur der Deckschicht.

Eine beispielsweise durch Coextrusion hergestellte mehrschichtige Folie, die eine elastomere Trägerschicht und eine nicht poröse Deckschicht aus einem steifen Polymer aufweist, reißt bei einer Verstreckung in Maschinenrichtung sehr schnell. Ein solches Material weist eine geringe Streckgrenze auf. Das liegt an der Orientierung der Makromoleküle, die bei der Extrusion entsteht. Die Festigkeit der nicht elastomeren Deckschicht ist in Maschinenrichtung wesentlich höher als in Querrichtung. Das führt dazu, dass bei einem lokalen Überschreiten der Bruchfestigkeit und Bruchdehnung die Dehngrenze der gesamten Coextrusionsfolie überschritten wird und der Schichtstoff zerreißt. Der Schichtstoff weist ein sprödes Verhalten in Maschinenrichtung auf. Dagegen verhält sich ein erfindungsgemäßer elastomerer Schichtstoff, der eine leicht geschäumte Deckschicht mit einer Vielzahl von Poren aufweist, wesentlich homogener. Beim Dehnen des erfindungsgemäßen Schichtstoffes entsteht eine gleichmäßige Mikrostruktur mit einer Vielzahl von Sollbruchstellen. Der erfindungsgemäße Schichtstoff ist aufgrund seiner Struktur daher in Maschinenrichtung durch Verstrecken mechanisch aktivierbar. Er kann um mindestens 50 %, vorzugsweise mehr als 100 % in Maschinenrichtung gedehnt werdem, wobei der irreversible Anteil der Dehnung bei einer Entlastung des Schichtstoffes weniger als 20 %, vorzugsweise weniger als 10 %, bezogen auf die Ursprungslänge des Schichtstoffes beträgt.

Die Poren enthaltende mikrotexturierte Deckschicht kann unterschiedliche Strukturen aufweisen, wobei auch Mischformen der nachfolgend erläuterten Strukturen möglich sind. Welche Strukturen sich einstellen, richtet sich auch nach der Dicke der Deckschicht. Bei einer großen Schichtstärke kann die mikrotexturierte Deckschicht eine poröse Schaumstruktur aufweisen, wobei die Poren der Schaumstruktur zumindest teilweise kleiner sind als die Dicke der extrudierten Deckschicht vor der Verstreckung des Schichtstoffes. Bei einer geringen Schichtstärke der Deckschicht bildet sich vornehmlich eine Zellenstruktur bestehend aus einer Polymermatrix und Poren, die sich zumindest teilweise über die gesamte Dicke der Deckschicht erstrecken. Die Mikrotextur, die sich nach einer Verstreckung des Schichtstoffes über die Elastizitätsgrenze der Deckschicht hinaus bildet, umfasst daher Falten und Poren, die sich an der Oberfläche der Deckschicht öffnen und Hohlräume und/oder Spalten bilden. Im Ergebnis resultiert eine aufgeraute Oberfläche, die sich bei einem Hautkontakt angenehm anfühlt.

Die Deckschicht des erfindungsgemäßen Schichtstoffes weist vorzugsweise eine vor der Verstreckung des Schichtstoffes gemessene Dicke zwischen 1 µm und 20 µm auf. Die Trägerschicht kann eine ebenfalls vor der Verstreckung gemessene Dicke zwischen 15 µm und 150 µm aufweisen.

Die elastomere Trägerschicht kann aus einem Blockcopolymer, ausgewählt aus der Gruppe der PEBA-Blockcopolymere, der Olefin-Block-Copolymere oder der Styrol-Block-Copolymere, insbesondere der SIS-, SBS-, SEBS- oder SIBS-Blockcopolymere, aus einem elastomeren Polyurethan oder aus einem elastomeren Ethylen-Copolymer bestehen. Die Deckschicht kann insbesondere aus einem Polyolefin, Polystyrol, Polyamid, Polycarbonat, Polymethylmethacrylat (PMMA), Polyoxymethylen (POM), Polyethylenterephthalat (PET), Polybutylenterephthalat (PBT) bestehen. Für die Deckschicht eignen sich ferner Polymermischungen aus Polyolefin, Polystyrol und Ethylen-Vinyl-Acetat oder Ethylbutylacrylat und Polystyrol.

Die Mikrotextur kann durch uniaxiales Verstrecken des Schichtstoffes in Extrusionsrichtung, d. h. in Maschinenrichtung oder durch biaxiales Verstrecken des Schichtstoffes gebildet werden.

Gegenstand der Erfindung ist auch ein Verfahren nach Anspruch 10 zur Herstellung des beschriebenen elastomeren Schichtstoffes. Bei dem erfindungsgemäßem Verfahren wird ein Coextrudat mit einer Trägerschicht aus einem thermoplastischen Elastomer und mindestens einer Deckschicht aus einem Polymer, welches eine geringere Elastizität aufweist, hergestellt. Das Coextrudat wird ferner zur Erzeugung einer Mikrotextur in der Deckschicht über die Elastizitätsgrenze der Deckschicht hinaus verstreckt und anschließend wieder entspannt. Erfindungsgemäß wird das Polymer für die Deckschicht mit einem Treibmittel versetzt, welches beim Aufschmelzen und Extrudieren des Polymers expandiert und Poren in der Deckschicht des Coextrudats bildet. Vorzugsweise wird ein chemisches endothermes Treibmittel verwendet, welches bei einer Temperatur zwischen 150° C und 250° C durch chemische Reaktion ein Gas bildet. Da ein endothermes Treibmittel bei seinen Zersetzungsreaktionen Energie verbraucht, hört die Gasentwicklung nach Beendigung der Wärmezufuhr auf. Die Gasentwicklung und damit auch die Porenbildung kann durch die Menge des Treibmittels, die Verteilung des Treibmittels in der Polymerschmelze sowie durch die Temperaturführung bei der Extrusion gut gesteuert werden. Das Treibmittel kann insbesondere als Granulat in Form eines Masterbatches mit einer Treibmittelkonzentration zwischen 10 und 70 Gew.-% bezogen auf die Masterbatchmenge verarbeitet werden. Ein geeignetes endothermes Treibmittel basiert beispielsweise auf NaHCO₃ und Zitronensäure. Dieses Treibmittel ist unter anderem zum Aufschäumen von Polyolefinen (PE, PP), Polyamid und Polystyrol geeignet.

Das Coextrudat wird nach der Extrusion abgekühlt und später uniaxial in Maschinenrichtung oder biaxial verstreckt. Die Verstreckung kann unmittelbar nach der Extrusion und Abkühlung erfolgen. Häufig ist es aber vorteilhaft, die Verstreckung erst bei einer Weiterverarbeitung vorzunehmen, weil dann die Außenschichten zunächst eine hohe Steifigkeit in Maschinenrichtung gewährleisten, wodurch ein Auf- und Abwinkeln des Coextrudates auf eine Rolle ermöglicht oder zumindest erleichtert und ein Verblocken des aufgewickelten Coextrudates vermieden werden. Die Verstreckung kann beispielsweise dann erfolgen, wenn das auf eine Rolle gewickelte Coextrudat ausgeliefert wurde und daraus beispielsweise durch die Kaschierung mit einem Nonwoven-Material elastische Verschlusselemente einer Windel gefertigt werden. Je nach Anwendungsfall kann die Mikrotexturierung auch für die Haptik und das Aussehen von Bedeutung sein, insbesondere wenn das Coextrudat lediglich auf einer Seite mit einem Nonwoven kaschiert wird. Das Coextrudat bildet dann bei dem hergestellten Laminat eine Außenseite, so dass durch die Mikrotextur eine angenehme weiche, textilartige Oberfläche gebildet wird.

Die Verstreckung wird auch als mechanische Aktivierung bezeichnet. Durch die Aktivierung erhält das Material seine elastischen Dehnungseigenschaften sowie eine äußere Mikrotextur. Der Schichtstoff kann insbesondere einen mehrschichtigen Aufbau mit einer elastomeren Trägerschicht als Kernschicht auf beiden Seiten des Schichtstoffes mikrotexturierte Deckschichten mit den erfindungsgemäßen Merkmalen aufweisen.

Im Folgenden wird die Erfindung anhand einer lediglich ein Ausführungsbeispiel darstellenden Zeichnung erläutet. Es zeigen schematisch:
- **Fig. 1**: einen Schnitt durch einen elastomeren Schichtstoff,
- **Fig. 2**: einen Schnitt durch den Schichtstoff im gedehnten Zustand,
- **Fig. 3**: die Oberfläche des in Fig. 1 dargestellten Schichtstoffes,
- **Fig. 4**: die Oberfläche des Schichtstoffes in gedehntem Zustand,
- **Fig. 5**: ein Dehnungsdiagramm, welches die Dehnung des Schichtstoffes in Maschinenrichtung kennzeichnet,
- **Fig. 6**: ein Verfahren zur Herstellung des Schichtstoffes.

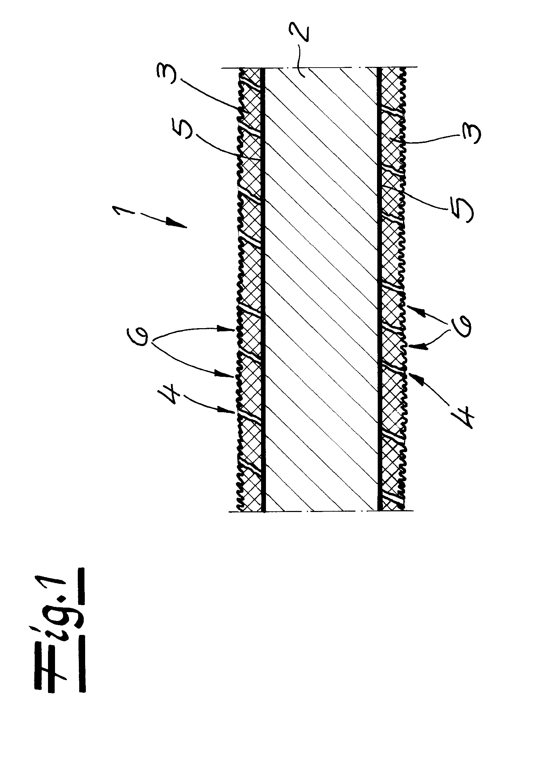

Der in Fig. 1 im Schnitt dargestellte Schichtstoff 1 weist eine elastomere Trägerschicht 2 aus einem thermoplastischen Elastomer und auf beiden Seiten der Trägerschicht eine mikrotexturierte Deckschicht 3 auf. Die mikrotexturierten Deckschichten 3 bestehen jeweils aus einem Polymer, welches eine geringere Elastizität aufweist als das Material der Trägerschicht 2. Die Mikrotextur des Schichtstoffes 1 ist durch Verstrecken des Schichtstoffes 1 über die Elastizitätsgrenze der Deckschichten 3 hinaus und einer elastischen Rückbildung des verstreckten Schichtstoffes 1 gebildet worden. Die mikrotexturierten Deckschichten 3 enthalten eine Vielzahl von Poren 4, die im Wesentlichen gleichmäßig in der Deckschicht verteilt sind. Zwischen der elastomeren Trägerschicht 2 und den Deckschichten 3 können optional Haftvermittlerschichten 5 angeordnet sein.

Die elastomere Trägerschicht 2 besteht vorzugsweise aus einem Blockcopolymer, ausgewählt aus der Gruppe SIS-, SBS-, SEBS-, SIBS- oder PEBA-Block-copolymere. Sie kann Zusätze von nicht elastischen Polymeren und/oder Verarbeitungshilfsmittel sowie Additive enthalten.

Die Deckschichten 3 bestehen aus einem Polymer, welches eine geringere Elastizität aufweist als das Material der elastomeren Trägerschicht 2. Als Polymere für die Deckschichten 3 kommen insbesondere Polyolefine, Polystyrol, Polyamid, Polycarbonat, PMMA, POM, Polyethylenterephthalat, PBT oder auch Mischungen aus Polyolefinen, Polystyrol und Ethylen-Vinyl-Acetat oder Mischungen aus Ethyl-Butyl-Acrylat und Polystyrol in Betracht. Die Deckschichten weisen vorzugsweise eine vor der Verstreckung des Schichtstoffes gemessene Dicke zwischen 1 µm und 20 µm auf. Die ebenfalls vor der Verstreckung gemessene Dicke der elastomeren Trägerschicht liegt vorzugsweise im Bereich zwischen 15 µm und 150 µm.

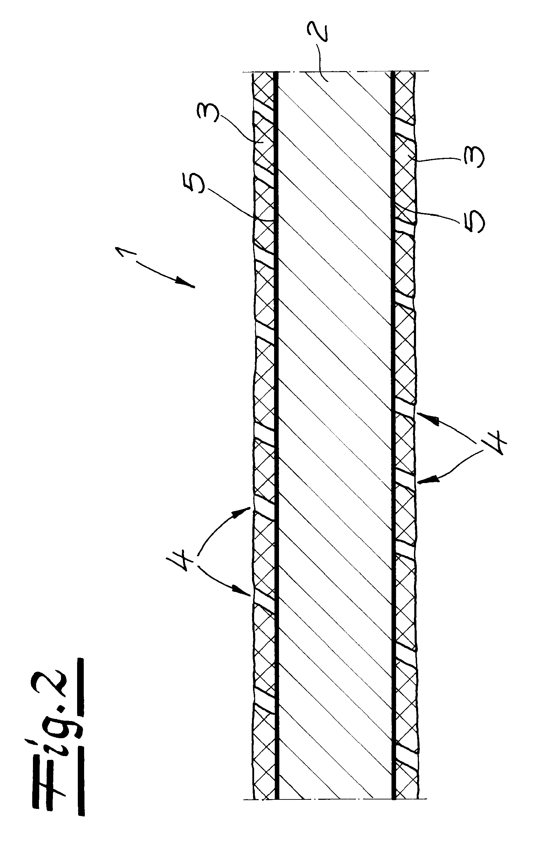

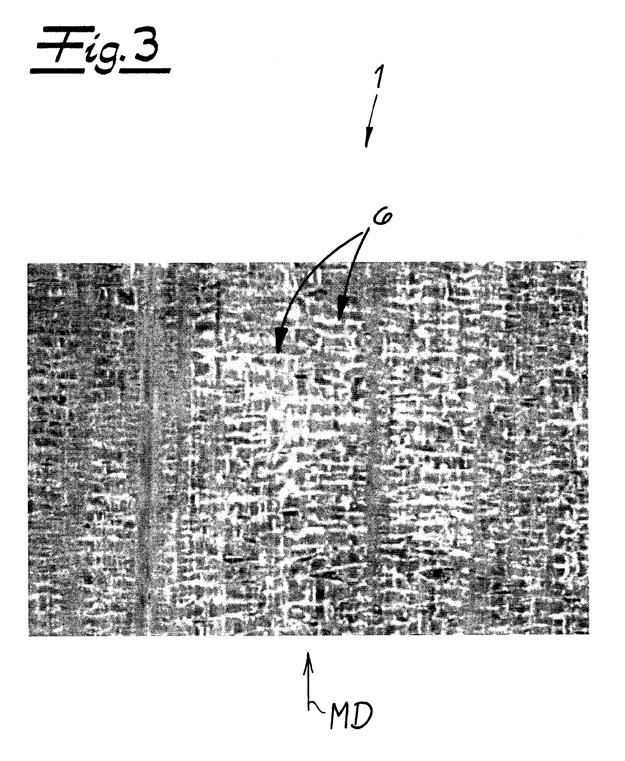

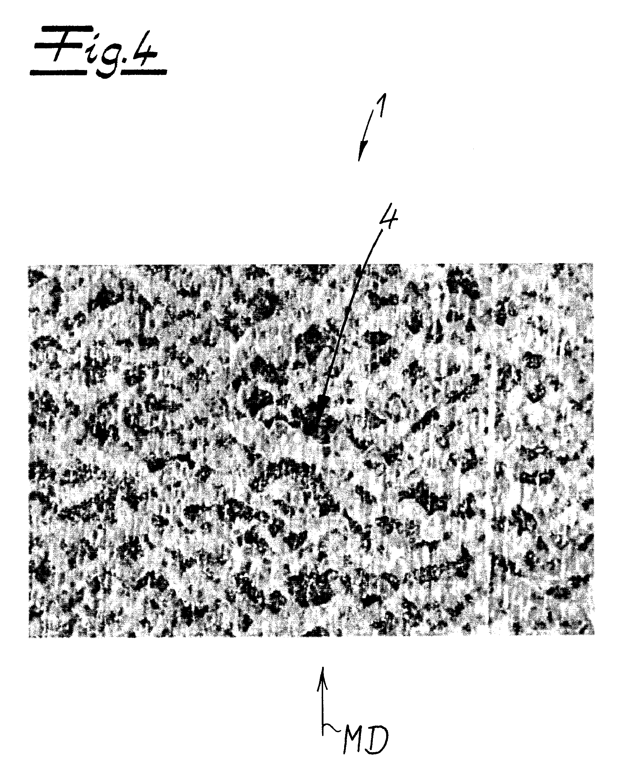

Die in den Deckschichten 3 enthaltenen Poren 4 erstrecken sich zumindest teilweise über die gesamte Dicke der Deckschicht 3. Es bildet sich eine Zellenstruktur bestehend aus einer Polymermatrix und Poren. Die Fig. 1 und 3 zeigen den Schichtstoff 1 im relaxierten, d. h. ungedehnten Zustand, während die Fig. 2 und 4 die Struktur der Folie des Schichtstoffes 1 in einem gedehnten Zustand darstellen. Einer vergleichenden Betrachtung des gedehnten und ungedehnten Zustandes entnimmt man, dass die Poren 4 sich bei einer Dehnung des Schichtstoffes 1 vergrößern. Die Oberfläche enthält Vertiefungen und Erhebungen. Im relaxierten Zustand erkennt man ferner Falten 6, die sich bei der Verstreckung des Schichtstoffes 1 über die Elastizitätsgrenze der Deckschicht hinaus und der elastischen Rückbildung des verstreckten Schichtstoffes 1 gebildet haben. Dieser Vorgang wird auch als Aktivierung bezeichnet. Die Mikrotextur setzt sich aus Falten sowie auch Poren, die zur Oberfläche hin offen sind, zusammen. Es ergibt sich eine aufgeraute Oberfläche mit textilähnlichem Charakter.

Die Struktur und Anordnung der Falten 6, die sich bei der Verstreckung des Schichtstoffes 1 über die Elastizitätsgrenze der Grenze hinaus gebildet haben, ist abhängig von der Streckrichtung. Die in Fig. 3 dargestellte Oberfläche ist durch eine uniaxiale Verstreckung in Maschinenrichtung (MD) gebildet worden.

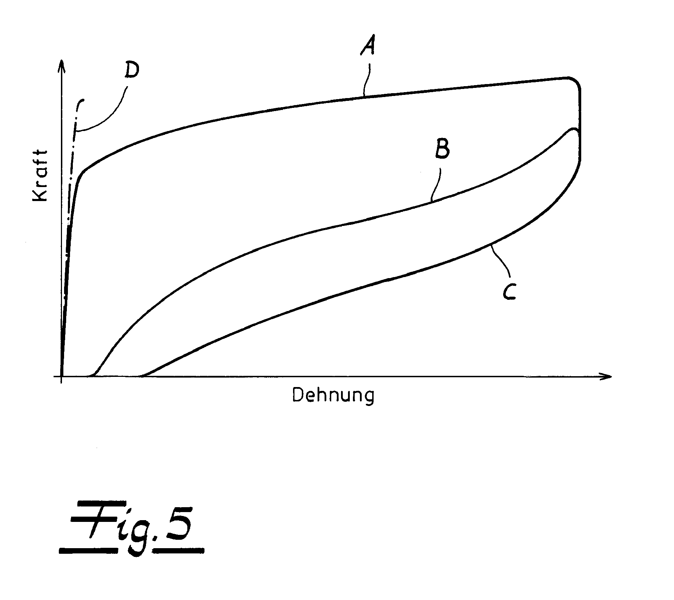

Die Dehnungscharakteristik des elastomeren Schichtstoffes 1 ist in Fig. 5 dargestellt. Aufgetragen ist die Dehnungskraft in Abhängigkeit der Dehnung des Schichtstoffes 1, wobei die Kurve A den Dehnungskraftverlauf bei einer erstmaligen Verstreckung und die Kurve B den Dehnungskraftverlauf bei einer zweiten und nachfolgenden Dehnung zeigt. Die Kurve C zeigt den Dehnungskraftverlauf des Schichtstoffes 1 bei einer auf die Dehnung folgenden Entlastung bzw. Rückdehnung. Einer vergleichenden Betrachtung der Kurven A und B entnimmt man, dass die irreversibel bleibende Dehnung des elastomeren Schichtstoffes nach der erstmaligen Verstreckung des Materials gering ist und bei der untersuchten Folie etwa 10 % beträgt. Zum Vergleich ist qualitativ der Dehnungskraftverlauf D eines dreischichtigen elastomeren Schichtstoffes dargestellt, dessen Deckschichten keine Poren enthalten. Bei einer Dehnung in Maschinenrichtung (MD) zerreißt das Material bereits bei einer geringen Dehnung von weniger als 20 %.

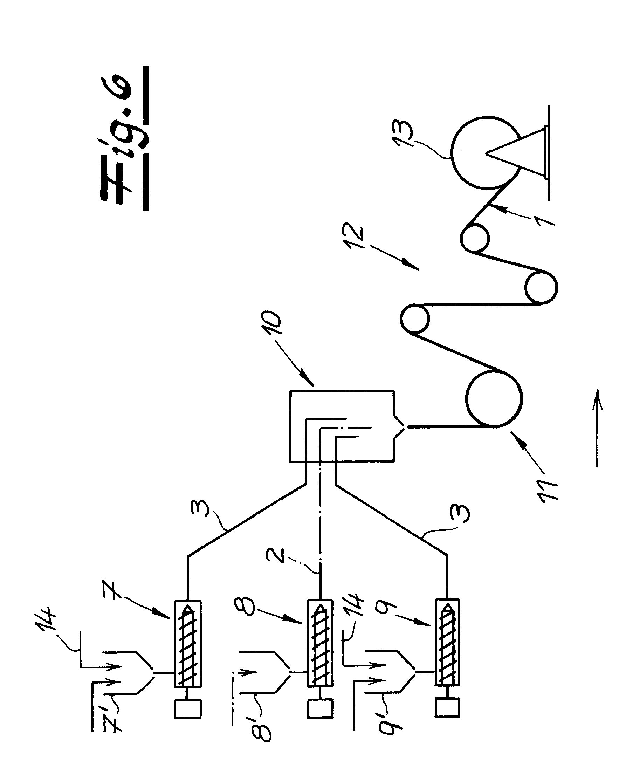

In Fig. 6 ist ein Verfahren zur Herstellung des elastomeren Schichtstoffes 1 dargestellt. Bei dem in Fig. 6 dargestellten Verfahren wird durch Mehrschichtenextrusion ein Coextrudat mit einer Trägerschicht 2 aus einem thermoplastischen Elastomer und äußeren Deckschichten 3 hergestellt. Die äußeren Deckschichten 3 bestehen jeweils aus einem Polymer, welches eine geringere Elastizität aufweist als das Material der Trägerschicht 2. Zur Coextrusion wird eine übliche Extruderanlage eingesetzt, die mehrere Extruder 7, 8, 9 mit zugeordneten Rohstoffbehältern 7', 8', 9' sowie einen Extruderkopf 10 mit einer Extrusionsdüse zur Extrusion einer mehrschichtigen Flachfolie aufweist. Das Coextrudat wird über eine Kühlwalze 11 geführt und anschließend in einer Streckeinrichtung 12 über die Elastizitätsgrenze der Deckschichten 3 hinaus verstreckt. Die Verstreckung erfolgt in Maschinenrichtung MD. Der elastomere Schichtstoff 1 wird anschließend wieder entspannt und auf eine Rolle 13 aufgewickelt.

Für die Deckschichten 3 werden den Rohstoffbehältern 7', 9' der Extruder 7, 9, Polymere oder Polymermischungen zugeführt, die relativ steife und wenig dehnbare Schichten bilden. Das Polymer für die Deckschichten 3 wird mit einem Treibmittel versetzt, welches als Masterbatch 14, z. B. in granulierter Form zugeführt wird. Das Treibmittel expandiert beim Aufschmelzen und Extrudieren des Polymers und bildet Poren in den Deckschichten 3 des Coextrudats. Es wird ein chemisch endothermes Treibmittel verwendet, welches bei einer Temperatur zwischen 150° C und 250° C durch chemische Reaktion Gase bildet.

Zur Erzeugung der elastomeren Trägerschicht 2 wird dem Rohstoffbehälter 8' des Extruders 8 ein elastomeres Polymer oder eine Polymermischung, die als wesentliche Komponente ein thermoplastisches Elastomer enthält, zugeführt.

Die Fig. 3 bis 5 beziehen sich auf eine Coextrusionsfolie mit folgendem Schichtenaufbau:
a) Elastomere Trägerschicht bestehend aus 75 Gew.-% SBS, 12 Gew.-% Polystyrol und 13 Gew.-% Verarbeitungshilfsmittel und Additiven mit einer vor der Verstreckung des Schichtstoffes gemessenen Schichtdicke von 85 µm;
b) Deckschichten bestehend aus 92 Gew.-% Polystyrol und 8 Gew.-% Masterbatch, das ein chemisches endothermes Treibmittel enthält. Im Masterbatch sind ca. 30 bis 50 Gew.-% Treibmittel enthalten. Die Deckschichten weisen eine Schichtdicke von ca. 5 µm auf.

Das Coextrudat wird zur Erzeugung einer Mikrotextur über die Elastizitätsgrenze der Deckschichten hinaus in Maschinenrichtung (MD) verstreckt. Durch elastische Rückdehnung bildet sich die in Fig. 3 dargestellten Mikrotextur an der Oberfläche der Deckschichten.

## Patentansprüche

1. Elastomerer Schichtstoff mit
einer elastomeren Trägerschicht (2) aus einem thermoplastischen Elastomer, und
mindestens einer mikrotexturierten Deckschicht (3) aus einem Polymer, welches eine geringere Elastizität aufweist als das Material der Trägerschicht (2),
wobei die Mikrotextur durch Verstrecken des Schichtstoffes (1) über die Elastizitätsgrenze der Deckschicht (3) hinaus und einer elastischen Rückbildung des verstreckten Schichtstoffes (1) gebildet wurde, **dadurch gekennzeichnet, dass** die mikrotexturierte Deckschicht (3) eine Vielzahl von Poren (4) enthält.

2. Elastomerer Schichtstoff nach Anspruch 1, **dadurch gekennzeichnet, dass** die Poren (4) gleichmäßig in der Deckschicht verteilt sind.

3. Elastomerer Schichtstoff nach Anspruch 1 oder 2, **dadurch gekennzeichnet, dass** die mikrotexturierte Deckschicht (3) eine poröse Schaumstruktur aufweist, wobei die Poren der Schaumstruktur kleiner sind als die Dicke der extrudierten Deckschicht (3) vor der Verstreckung des Schichtstoffes (1).

4. Elastomerer Schichtstoff nach einem der Ansprüche 1 bis 3, **dadurch gekennzeichnet, dass** die mikrotexturierte Deckschicht (3) eine Zellenstruktur mit einer Polymermatrix und Poren (4), welche sich zumindest teilweise über die gesamte Dicke der Deckschicht (3) erstrecken, aufweist.

5. Elastomerer Schichtstoff nach einem der Ansprüche 1 bis 4, **dadurch gekennzeichnet, dass** die Deckschicht (3) eine vor der Verstreckung des Schichtstoffes (1) gemessene Dicke zwischen 1 µm und 20 µm und die Trägerschicht (2) eine ebenfalls vor der Verstreckung gemessene Dicke zwischen 15 µm und 150 µm aufweist.

6. Elastomerer Schichtstoff nach einem der Ansprüche 1 bis 5, **dadurch gekennzeichnet, dass** die Trägerschicht (2) aus einem Blockcopolymer, ausgewählt aus der Gruppe der SIS-, SBS-, SEBS- oder PEBA-Blockcopolymere oder aus einem elastomeren Polyurethan oder aus einem elastomeren Ethylen-Copolymer besteht.

7. Elastomerer Schichtstoff nach einem der Ansprüche 1 bis 6, **dadurch gekennzeichnet, dass** die Deckschicht (3) aus einem Polyolefin, Polystyrol, Polyamid, Polycarbonat, PMMA, POM, Polyethylenterephthalat, PBT oder einer Mischung aus Polyolefinen, Polystyrol und Ethylen-Vinyl-Acetat oder aus einer Mischung aus Ethyl-Butyl-Acrylat und Polystyrol besteht.

8. Elastomerer Schichtstoff nach einem der Ansprüche 1 bis 7, **dadurch gekennzeichnet, dass** die Mikrotextur durch uniaxiales Verstrecken des Schichtstoffes (1) in Extrusionsrichtung gebildet wurde.

9. Elastomerer Schichtstoff nach einem der Ansprüche 1 bis 7, **dadurch gekennzeichnet, dass** die Mikrotextur durch biaxiales Verstrecken des Schichtstoffes (1) gebildet wurde.

10. Verfahren zur Herstellung eines elastomeren Schichtstoffes nach einem der Ansprüchen 1 bis 9,
wobei ein Coextrudat mit einer Trägerschicht (2) aus einem thermoplastischem Elastomer und mindestens einer Deckschicht (3) aus einem Polymer, welches eine geringe Elastizität aufweist, hergestellt wird, und
wobei das Coextrudat zur Erzeugung einer Mikrotextur in der Deckschicht (3) über die Elastizitätsgrenze der Deckschicht (3) hinaus verstreckt und anschließend wieder entspannt wird,
**dadurch gekennzeichnet, dass** das Polymer für die Deckschicht (3) mit einem Treibmittel versetzt wird, welches beim Aufschmelzen und Extrudieren des Polymers expandiert und Poren (4) in der Deckschicht ( 3) des Coextrudats bildet.

11. Verfahren nach Anspruch 10, **dadurch gekennzeichnet, dass** ein chemisches endothermes Treibmittel verwendet wird, welches bei einer Temperatur zwischen 150° C und 250° C durch chemische Reaktion ein Gas bildet.

12. Verfahren nach einem der Ansprüche 10 bis 11, **dadurch gekennzeichnet, dass** das Coextrudat abgekühlt und anschließend uniaxial in Extrusionsrichtung oder biaxial verstreckt wird.
